Europäisches Patentamt

European Patent Office

Office européen des brevets

(11) Veröffentlichungsnummer : **0 485 390 B1**

(12) **EUROPÄISCHE PATENTSCHRIFT**

(45) Veröffentlichungstag der Patentschrift :
04.08.93 Patentblatt 93/31

(51) Int. Cl.$^5$ : **H04B 1/66**

(21) Anmeldenummer : 90908950.0

(22) Anmeldetag : 17.05.90

(86) Internationale Anmeldenummer :
PCT/EP90/00795

(87) Internationale Veröffentlichungsnummer :
WO 90/14719 29.11.90 Gazette 90/27

(54) VERFAHREN ZUR ÜBERTRAGUNG EINES SIGNALS.

(30) Priorität : 17.05.89 DE 3915895
06.10.89 DE 3933475

(43) Veröffentlichungstag der Anmeldung :
20.05.92 Patentblatt 92/21

(45) Bekanntmachung des Hinweises auf die
Patenterteilung :
04.08.93 Patentblatt 93/31

(84) Benannte Vertragsstaaten :
AT BE CH DE DK ES FR GB IT LI LU NL SE

(56) Entgegenhaltungen :
IEEE Transactions on Acoustics, Speech and
Signal Processing, vol. ASSP-34, no. 5, October 1986, IEEE (New York, US); J.P. Princen et
al.: "Analysis/synthesis filter bank design based on time domain aliasing cancellation",
pages 1153-1161

(73) Patentinhaber : TELEFUNKEN FERNSEH UND
RUNDFUNK GMBH
W-3000 Hannover 91 (DE)

(72) Erfinder : VAUPEL, Thomas
Leggewiestr. 23
W-4300 Essen (DE)
Erfinder : KRAHE, Detlef
Michelsheide 13
W-4152 Kempen 3 (DE)
Erfinder : DICKOPP, Gerhard
Buschstr. 208
W-4150 Krefeld-Bockum (DE)

(74) Vertreter : Einsel, Robert, Dipl.-Ing.
TELEFUNKEN Fernseh und Rundfunk GmbH
Patent- und Lizenzabteilung Göttinger
Chaussee 76
W-3000 Hannover 91 (DE)

EP 0 485 390 B1

Jouve, 18, rue Saint-Denis, 75001 PARIS

## Beschreibung

Die Erfindung betrifft ein Verfahren zur Übertragung eines Signals nach dem Oberbegriff des Anspruchs 1.

Bei der Übertragung eines Audiosignals, z.B. bei der Rundfunkübertragung, Kabelübertragung, Satellitenübertragung und bei Aufzeichnungsgeräten ist es bekannt, das analoge Audiosignal in ein digitales Audiosignal mit einer bestimmten Auflösung umzuwandeln, in dieser Form zu übertragen und bei der Wiedergabe wieder in ein analoges Signal umzusetzen. Durch die digitale Übertragung wird insbesondere bei der Wiedergabe ein größerer Störabstand erreicht.

Die für die Übertragung eines solchen Signals erforderliche Bandbreite ist im wesentlichen bestimmt durch die Zahl der zu übertragenden Abtastwerte pro Zeiteinheit sowie durch die Auflösung.

In der Praxis besteht die Forderung, die für die Übertragung notwendige Bandbreite möglichst klein zu halten, um mit einem schmalbandigen Kanal auszukommen oder über einen breitbandigen Kanal möglichst viele Audiosignale gleichzeitig übertragen zu können. Die erforderliche Bandbreite läßt sich ansich verringern durch eine Reduzierung der Abtastwerte oder der Anzahl der Bits pro Abtastwert. Diese Maßnahme hat aber in der Regel eine Verschlechterung der Wiedergabequalität zur Folge.

Bei einem aus der DE-OS 35 06 912 bekannten Verfahren wird zur Verbesserung der Wiedergabequalität das digitale Audiosignal in zeitlich aufeinanderfolgende Abschnitte zerlegt und in ein Kurzzeitspektrum transformiert, welches jeweils für die Zeitabschnitte die Spektralkomponenten des Signals darstellt. In dem Kurzzeitspektrum lassen sich auf Grund psychoakustischer Gesetzmäßigkeit im allgemeinen Komponenten, die vom Hörer nicht wahrgenommen werden, also im nachrichtentechnischen Sinne irrelevant sind, besser auffinden, als im Zeitbereich. Diese Komponenten werden bei der Übertragung weniger gewichtet oder ganz weggelassen. Hierdurch kann bei der Übertragung ein beträchtlicher Teil der sonst notwendigen Daten entfallen, so daß die mittlere Bitrate wesentlich verringert werden kann.

Für die Bildung der Zeitabschnitte wird das Signal zunächst im Zeitbereich mit einem Analysefenster bewertet und nach der Transformation, Codierung, Übertragung, Decodierung und Rücktransformation abschließend mit einem Synthesefenster bewertet. Die Ausgestaltung des Analysefensters beeinflußt die Frequenzauflösung sowie die bei der Übertragung anfallende Datenmenge. So ist bei Fenstern mit "harten" Flanken, wie sie z.B. ein Rechteckfenster aufweist, die Frequenzauflösung schlecht. Dem Spektrum des ursprünglichen Signals werden nämlich im bewerteten Abschnitt zusätzlich die durch den extrem Signalanstieg und -abfall am Anfang und Ende des Fensters verursachten Spektralanteile zugefügt. Allerdings könnten die Zeitabschnitte überlappungsfrei aneinander gefügt werden.

Bei dem in der DE-OS 35 06 912 beschriebenen Verfahren wurde bereits eine Fensterfunktion mit "weicheren" Flanken gewählt. Hier folgt der Anfang und das Ende des Analysefensters einer Kosinusquadratfunktion und die entsprechenden Bereiche des Synthesefensters einer Sinusquadratfunktion. Der mittlere Bereich beider Fenster weist einen konstanten Wert auf. Durch eine derartige Ausgestaltung der Fensterfunktion ergibt sich bereits eine verbesserte Frequenzauflösung. Im Bereich der "weichen" Flanken ist jedoch eine Überlappung der aufeinanderfolgenden Zeitabschnitte erforderlich, die durch die doppelte Übertragung der in diesem Bereich enthaltenen Signale zu einer Erhöhung der mittleren Bitrate führt.

Eine weitere Verbesserung der Frequenzauflösung ließe sich durch eine noch geringere Flankensteilheit der Fensterfunktion des Analysefensters sowie durch eine Ausdehnung des Flankenbereichs innerhalb des Fensters erzielen. Bei dieser Maßnahme ist jedoch zwangsläufig eine größere Überlappung benachbarter Zeitabschnitte erforderlich.

Wird der Flankenbereich soweit ausgedehnt, daß die Fensterfunktionen in keinen Bereich mehr einen konstanten Wert aufweist, so müssen sich benachbarte Zeitabschnitte um 50% überlappen. Dadurch wird die Zahl der Abtastwerte und dementsprechend die Datenmenge verdoppelt.

Aus den Veröffentlichung J.P. Princen and A.B. Bradley, "Analysis/Synthesis Filter Bank Design Based on Time Domain Aliasing Cancellation", IEEE Transactions, ASSP-34, No. 5, Oct. 1986, pp. 1153-1161; und J.P. Princen, A.W. Johnson and A.B. Bradley, "Suband/Transform Coding Using Filter Bank Design Based on Time Domain Aliasing Cancellation", IEEE Int. Conference on Acoustics, Speech and Signal Processing 1987, S. 2161-2164, ist es bekannt, bei einer 50%igen Überlappung aufeinanderfolgender Zeitabschnitte die Datenmenge wieder auf den ursprünglichen Wert zu reduzieren, indem nur jeder zweite Abtastwert codiert wird. Dieser Vorschlag geht von gleichen Fensterfunktionen beim Analyse- und Synthesefenster aus. Die bei der Unterabtastung auftretenden Aliaskomponenten lassen sich bei gleichen Fensterfunktionen nach der Bewertung mit dem Synthesefenster kompensieren.

Zur Verbesserung der Frequenzauflösung kann es sinnvoll sein, ein speziell gestaltetes Fenster bei der Analyse zu verwenden, um z.B. eine geringe Anfangssteigung der Fensterfunktion zu realisieren. Der Vorteil einer solchen Fensterfunktion liegt darin, daß bei schmalbandigen Signalkomponenten eine sehr hohe Fre-

<div align="center">2</div>

quenzauflösung erzielt wird, die dann bei der Codierung zu einer sehr effektiven Bitzuweisung mit geringer Datenrate führt.

Aus dem Vortragsmanuscript B. Feiten, "Spectral Properties of Audio Signals and Masking with Aspect to Bit Data Reduction", 86th AES-Convention, 1989 March ist es bekannt, unterschiedliche Fensterfunktionen bei der Analyse und der Synthese zu verwenden und diese auf sich 50% überlappende Zeitabschnitte anzuwenden. Die beschriebene graphische Definition der Synthesefunktion führt jedoch nicht zu einer Kompensation der Aliaskomponenten nach der Bewertung mit dem Synthesefenster.

Der Erfindung liegt deshalb die Aufgabe zugrunde, das Verfahren zur Übertragung eines Signals, wie es im Oberbegriff des Anspruchs 1 wiedergegeben ist, dahingehend zu verbessern, daß bei freier Wahl eines Analysefensters ein Synthesefenster ermittelt werden kann, bei deren Kombination die Aliaskomponenten zu Null kompensiert werden.

Diese Aufgabe wird bei einem Verfahren, wie es im Oberbegriff des Anspruchs 1 beschrieben ist, durch die im kennzeichnenden Teil angegebenen Merkmale gelöst.

Die Erfindung ermöglicht es also, die Synthesefensterfunktion mathematisch exakt aus der frei wählbaren Analysefensterfunktion herzuleiten. Dadurch kann die Analysefensterfunktion optimal den Gegebenheiten für eine hohe Frequenzauflösung angepaßt werden, ohne daß dieser Vorteil durch Aliaskomponenten bei der Wiedergabe des Signals teilweise oder ganz beseitigt wird. Die angegebene Beziehung berücksichtigt auch unsymmetrische Fensterfunktionen. Bei symmetrischen Fensterfunktionen sieht eine Weiterbildung eine Vereinfachung der Berechnung des Synthesefensters vor.

Die Erfindung wird nachfolgend an Hand eines Ausführungsbeispiels das in der Zeichnung dargestellt ist, erläutert und dem Stand der Technik gegenübergestellt.

In der Zeichnung zeigen:

Fig. 1  Ein Flußdiagramm mit den wesentlichen Verfahrens schritten der Erfindung,

Fig. 2  eine Darstellung von Analysefenster und Synthesefenster gemäß einem bekannten Verfahren,

Fig. 3  eine Darstellung der Aliaskomponenten für die Fensterfunktionen gemäß Fig. 2,

Fig. 4  eine Darstellung von Analysefenster und Synthesefenster gemäß dem erfindungsgemäßen Verfahren,

Fig. 5  eine Darstellung der Aliaskomponenten für die Fensterfunktionen gemäß Fig. 4,

Fig. 6  eine Tabelle zur Darstellung des Zusammenhangs zwischen Real- und Imaginärteilen einerseits und Pseudobeträgen und -Phasen andererseits bei einer Alternative der Unterabtastung und

Fig. 7  eine Tabelle ähnlich Fig. 6 bei einer anderen Alternative der Unterabtastung.

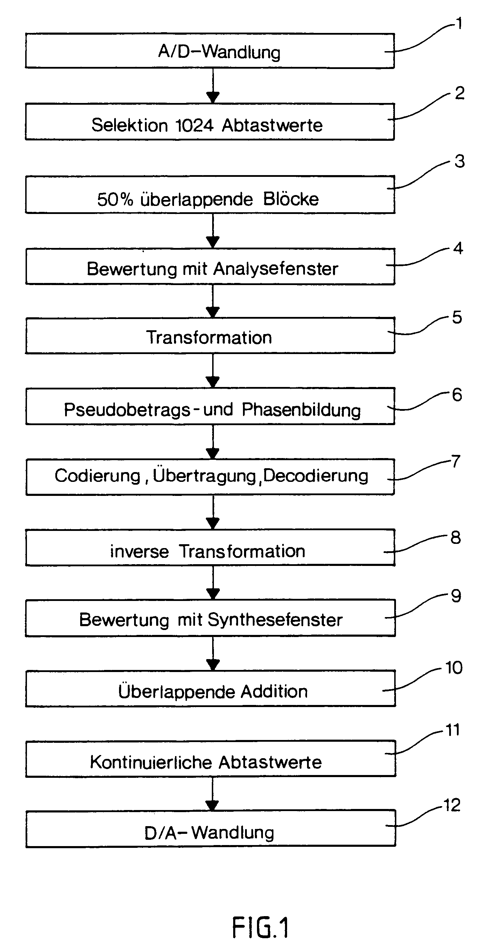

In dem in Fig. 1 dargestellten Flußdiagramm sind die einzelnen Verfahrensschritte zur Durchführung des Verfahrens der Erfindung dargestellt.

Die Ausgangsgröße des Verfahrens bildet ein analoges Audiosignal, das gemäß Verfahrensschritt 1 in ein digitales Signal umgewandelt wird, in dem Amplitudenwerte als Abtastwerte digital codiert vorliegen.

Im Verfahrensschritt 2 wird das kontinuierliche Signal gefenstert, indem eine Reihe aufeinanderfolgender Abtastwerte, im vorliegenden Fall 1024 Abtastwerte, selektiert werden.

Im Verfahrensschritt 3 werden aus den selektierten Abtastwerten Blöcke gebildet, die sich zeitlich um 50% überlappen. Das bedeutet, daß in benachbarten Blöcken teilweise dieselben Abtastwerte vorhanden sind, allerdings an unterschiedlichen Stellen. So entsprechen die in der ersten Hälfte eines aktuellen Blockes vorhandenen Abtastwerte den in der zweiten Hälfte des vorhergehenden Blockes vorhandenen Abtastwerte.

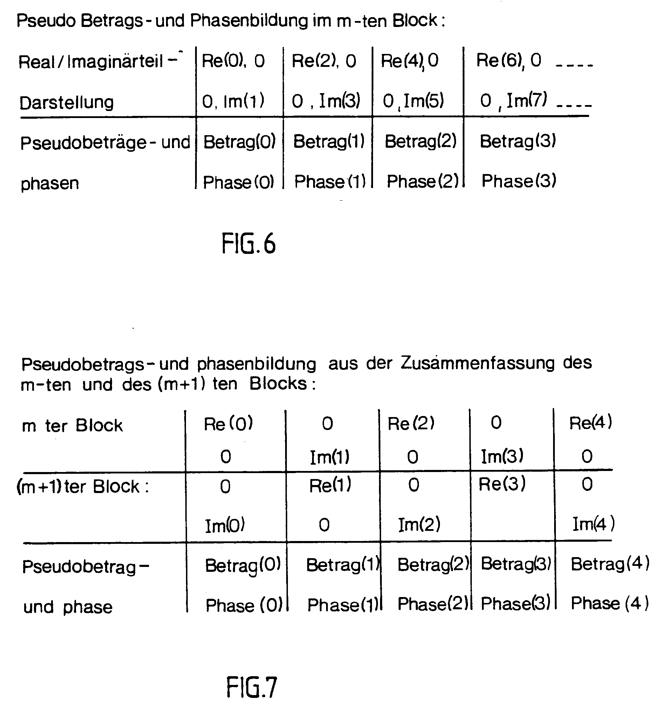

Im Verfahrensschritt 4 werden die in den Blöcken enthaltenen Signalabschnitte mit Analysefenstern bewertet. Hierdurch wird ein weicher Signaleinsatz und -auslauf an den Blockgrenzen erzeugt, der die Analyseschärfe bei der nachfolgenden Transformation erhöht. Ein geeignetes Analysefenster ist in Fig. 4 dargestellt, worauf noch weiter unten eingegangen wird.

Der Verfahrensschritt 5 bildet die Transformation des bislang zeitdiskreten Signals in ein frequenzdiskretes Signal. Anstelle von Amplitudenwerten treten nunmehr Spektralwerte auf. Handelt es sich bei der Transformation um eine Fourier-Transformation, umfassen die transformierten Werte bereits jeweils einen Real- und Imaginärteil.

Anschließend erfolgt im Verfahrensschritt 6 eine Umwandlung der Spektralwerte in eine Darstellung mit Psydobeträgen- und -phasen. Die Spektralwerte sind dann für ein Übertragungsverfahren aufbereitet und geeignet, wie es in der DE-OS 35 06 912 beschriebenen ist. Hierfür sind mehrere Alternativen möglich, von denen zwei in den Tabellen gemäß Fig. 6 und 7 dargestellt sind. Im Zusammenhang mit der Umwandlung der Spektralwerte wird auch gleichzeitig eine Unterabtastung durchgeführt. Im Ergebnis stimmt dann die Anzahl der zu übertragenden Werte wieder mit der Anzahl der ursprünglichen Abtastwerte überein. Die durch die 50%ige Überlappung der Blöcke verursachte Verdoppelung der Daten ist also hier wieder rückgängig gemacht worden.

Im mit 7 bezeichneten Verfahrensschritt sind mehrere Einzelschritte zusammengefaßt, welche die Codierung, gegebenenfalls Datenreduktion, Übertragung und Decodierung umfassen. Diese Verfahrensschritte können entsprechend dem in der DE-OS 35 06 912 Verfahren durchgeführt werden.

Im Verfahrensschritt 8 erfolgt nun eine zu dem Verfahrensschritt 5 inverse Transformation, der jedoch bei vorangegangener Datenreduktion ein verändertes, von psychoakustisch redundanten Bestandteilen befreites Signal unterzogen wird. Das Ergebnis der inversen Transformation sind wieder zeitdiskrete Signale in Form von Signalabschnitten eines kontinuierlichen Signals darstellenden Blöcken. In den Blökken sind aber nur noch die Hälfte der ursprünglichen Abtastwerte vorhanden.

Im anschließenden Verfahrensschritt 9 wird eine Wichtung der Blöcke mit Synthesefenstern vorgenommen. Die Synthesefensterfunktionen sind so ausgestaltet, daß sie die Signalverzerrungen, die durch Wichtung mit den Analysefenstern im Verfahrensschritt 4 entstanden sind, wieder ausgleichen. Die hier verwendeten Synthesefensterfunktionen erfüllen zwei Kriterien. Zum einen ergänzen sie sich im Überlappungsbereich mit den entsprechenden Analysefenstern zu Eins. Zum anderen ist das in der Mitte des Überlappungsbereichs gespiegelte Analysefenster multipliziert mit dem Synthesefenster für den Block n in der Differenz mit dem in der Mitte des Überlappungsbereich gespiegelte Analysefenster multipliziert mit dem Synthesefenster für den Block n+1 im Überlappungsbereich identisch Null. Dieses letztere Kriterium beeinhaltet die Kompensation der Aliaskomponenten.

Im Verfahrensschritt 10 werden die sich 50% überlappenden Blöcke addiert, wobei die Aliaskomponenten in den beiden zu überlagernden Blöcken jeweils mit umgekehrtem Vorzeichen auftritt, so daß er sich bei Addition zu Null kompensiert.

Der Verfahrensschritt 11 stellt die Bildung kontinuierlicher Abtastwerte durch Aneinanderfügen der Blöcke mit den gefensterten Signalabschnitten dar.

Schließlich wird im letzten, mit 12 bezeichneten Verfahrensschritt eine Umwandlung der digital codierten Abtastwerte in ein analoges Signal vorgenommen, dem zwar objektiv Anteile fehlen, das aber subjektiv als mit dem ursprünglichen Signal identisch empfunden wird.

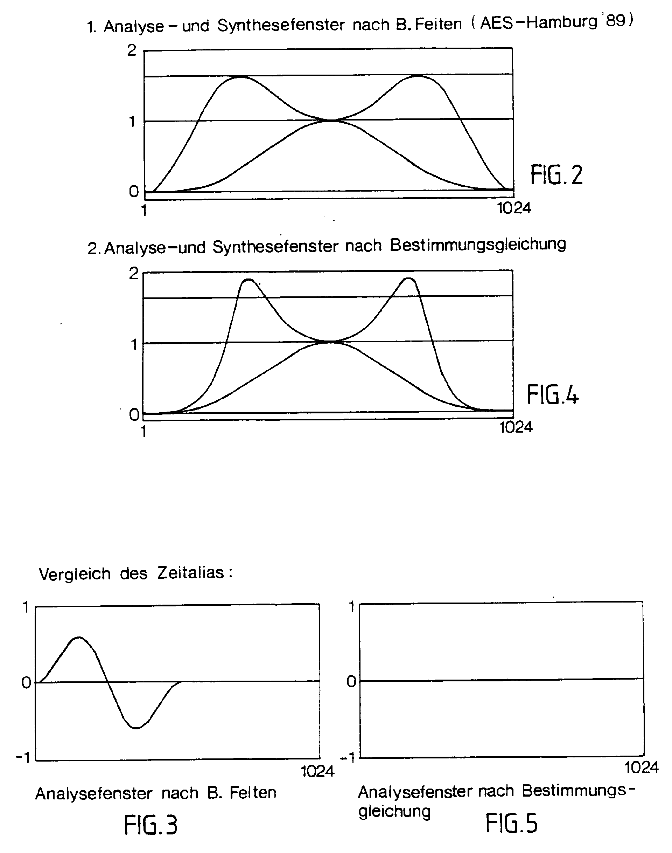

Fig. 2 zeigt die Darstellung von Fensterfunktionen, nämlich eines Analyse- und eines Synthesefenster, wie sie in der Literaturstelle B. Feiten, "Spectral Properties of Audio Signals and Masking with Aspect to Bit Data Reduction", 86th AES-Convention, 1989 March beschrieben ist. werden die in dieser Darstellung angegebenen Fensterfunktionen in den Verfahrensschritten 4 und 9 gemäß der Darstellung in Fig. 1 verwendet, so ergeben sich jedoch die in Fig. 3 dargestellten Aliaskomponenten. Dies ist unerwünscht, da praktisch die durch die höhere Analyseschärfe verbesserte Darstellungsgenauigkeit teilweise wieder zunichte macht.

Fig. 4 zeigt Fensterfunktionen, nämlich ein Analyse- und ein Synthesefenster, bei der die Synthesefensterfunktion aus der frei gewählten Analysefensterfunktion nach der Erfindung gemäß den Gleichungen:

$$s_n(t) = \frac{a_{n-1}(T_B/2 - t)}{a_n(T_B/2 - t) * a_{n+1}(t) + a_n(t) * a_{n+1}(T_B/2 - t)} \; ; \; 0 \leq t \leq T_B/2$$

$$s_{n+1}(t) = \frac{a_n(T_B/2 - t)}{a_n(T_B/2 - t) * a_{n+1}(t) + a_n(t) * a_{n+1}(T_B/2 - t)} \; ; \; 0 \leq t \leq T_B/2$$

berechnet wurde. In diesen Gleichungen bedeuten:

$a_n(t)$ die Analysefensterfunktion für den Block n,

$s_n(t)$ die Synthesefensterfunktion für den Block n,

$a_{n+1}(t)$ die Analysefensterfunktion für den Block n+1,

$s_{n+1}(t)$ die Synthesefensterfunktion für den Block n+1 und

$T_B$ die Blockzeit

Die zugehörige Darstellung der Aliaskomponenten in Fig. 5 zeigt, daß hier die Aliaskomponenten zu Null kompensiert werden, also die verbesserte Darstellungsgenauigkeit der Wiedergabe des Signals voll zugute kommt.

Während die oben angegebene Gleichung allgemein auch unsymmetrische Fenster berücksichtigt, läßt sich für symmetrische Fensterfunktionen, wie sie die in Fig. 4 dargestellte ist, auch die vereinfachte Gleichung:

$$s(t) = \frac{a(T_B/2 - t)}{a(T_B/2 - t) * a(t) + a(t) * a(T_B/2 - t)} \; ; \; 0 \leq t \leq T_B/2$$

angeben. In dieser Gleichung bedeuten:

$a(t)$ die Analysefensterfunktion,

$s(t)$ die Synthesefensterfunktion und

$T_B$ die Blockzeit

Die im Verfahrensschritt 6 vorgenommene Unterabtastung kann so durchgeführt werden, daß im m-ten Block die Realteile der Spektralwerte mit geradem Frequenzindex und die Imaginärteile der Spektralwerte mit ungeradem Frequenzindex zur Übertragung benutzt werden. Im (m+1)-Block werden die Realteile der Spektralwerte mit ungeradem Frequenzindex und die Imaginärteile der Spektralwerte mit geradem Frequenzindex zur Übertragung benutzt. Somit benötigt man für einen Block mit N-Werten bei etwa 50% Überlappung nur N/4 Realteile und N/4 Imaginärteile zur Übertragung.

Sollen die Spektren mit einem Codec verarbeitet werden, der eine Betrags- und Phasendarstellung verlangt, so benötigt man Betrags- und Phasenwerte der Spektralwerte. Hierzu müssen die Real- und Imaginärteile in entsprechende Betrags- und Phasenwerte umgewandelt werden.

Die in Fig. 6 und 7 dargestellten Tabellen zeigen die Bildung von Pseudobeträgen und -phasen aus Real- und Imaginärteilen bei der Transformation des Signals in ein frequenzdiskretes Signal sowie die Auswahl der Werte für die Unterabtastung.

Bei der Alternative, die die Tabelle in Fig. 6 veranschaulicht, wird eine Pseudobetrag- und -phasendarstellung gebildet, in dem man jeweils die Realteile der Spektralwerte mit den Frequenzindexen n mit den benachbarten Imaginärteilen der Spektralwerte der Frequenzindexe n+1 zu Betrag und Phase zusammenfaßt. Man erhält dadurch N:4 Beträge und N:4 Phasen. Diese Darstellung ist in Fig. 6 wiedergegeben.

Bei einer anderen Alternative, wie sie Fig. 7 zeigt, werden jeweils zwei aufeinanderfolgende Blöcke zusammengefaßt. Pseudobetrag und Pseudophase errechnen sich aus den Realteilen den m-ten und den Imaginärteilen des (m+1)-ten Blocks mit gleichem Frequenzindex. So erhält man für zwei Blöcke N/2 Beträge und N/2 Phasen.

Bei einer weiteren Alternative wird die Pseudobetrags- und Pseudophasenbildung erläutert, wenn als Transformation eine modifizierte Cosinus- und Sinustransformation vorgenommen wird.

Zuerst werden die sich 50% überlappenden Blöcke blockweise abwechselnd einer modifizierten Cosinustransformation gemäß der Gleichung

$$y(k) = D_k \sum_{n=0}^{N-1} x(n) * \cos\left[\frac{(2n+1+N/2)k\,\pi}{2N}\right] ; \quad 0 \le k \le N-1$$

unterzogen, wobei

y die Spektralwerte,
k die Indizes der Spektralwerte,
D eine Konstante gemäß der Definition

$$D_O \text{ (für } k = 0\text{)} = \sqrt{N} ; \quad D_k = \sqrt{2/N} ; \quad 1 \le k \le N - 1$$

x die Zeitwerte,
n die Indizes der Zeitwerte der Abtastung und
N die Zahl der Abtastwerte innerhalb eines Blockes
sind und einer modifizierten Sinustransformation gemäß der Gleichung

$$y(k) = D_k \sum_{n=0}^{N-1} x(n) * \sin\left[\frac{(2n+1+N/2)k\,\pi}{2N}\right] ; \quad 1 \le k \le N$$

unterzogen, wobei
y die Spektralwerte,
k die Indizes der Spektralwerte,
D eine Konstante gemäß der Definition

$$D_k = \sqrt{2/N} ; \quad 1 \le k \le N - 1 ; \quad D_N = \sqrt{N}$$

x die Zeitwerte,
n die Indizes der Zeitwerte der Abtastung und
N die Zahl der Abtastwerte innerhalb eines Blockes
sind und bei der Rücktransformation einer zur Hintransformation inversen Transformation unterzogen.

Beide Transformationen liefern reelle Spektralwerte. Sie sind dementsprechend nicht unmittelbar geeignet für eine Codierung nach Betrag und Phase, wie im Falle der Fourier-Transformation.

Von den anfallenden Spektralwerten werden die geragzahligen ausgewählt, wodurch die Anzahl der weiterverwendeten Spektralwerte nur halb so groß ist wie die der Origanalwerte.

Danach werden komplexe Werte aus den Spektralwerten jeweils zweier aufeinanderfolgender, sich überlappenden Blöcke gebildet, indem z. B. die Werte des ersten Blockes mit 1 und diejenigen des zweiten Blockes nit j multipliziert werden und gleichindizierte Werte der beiden Blöcke addiert werden. Dadurch ergeben sich komplexe Werte, die nach Betrag und Phase zerlegt werden können. Da die Real- und Imaginärteile der komplexen Werte jeweils nicht aus ein und demselben Block stammen, werden sie als Pseudobetrags- und -phasenwerte bezeichnet.

Das so entstehende Pseudospektrum weist bezüglich Betrag und Phase im allgemeinen große Ähnlichkeit mit den Fourierspektren der beiden betrachteten sich einander überlappenden Blökke auf, sofern die zeitliche Dauer der einzelnen Blöcke etwa 20 ms nicht wesentlich überschreitet. Aufgrund der Ähnlichkeit eignen sich für die Codierung der Pseudospektralwerte Verfahren, die für die Codierung echter Fourierspektralwerte nach Betrag und Phase optimiert wurden, z. B. das in der DE-OS 35 06 912 beschriebene Verfahren.

## Patentansprüche

1. Verfahren zur Übertragung eines Signals, indem dieses durch Fenster in aufeinanderfolgende, sich mindestens 50% überlappende Blöcke aufgeteilt und die in den Blökken enthaltenen Signalabschnitte mittels Analysefenstern bewertet werden, daß dann die in den Blöcken enthaltenden Teilsignale nach einem eine Unterabtastung mit Kompensation der Aliaskomponenten ermöglichenden Transformationsverfahren, wie z.B. dem "Time Domain Aliasing Cancellation"-Verfahren,durchgeführt wird, daß die als Ergebnis der Transformation entstehenden Spektren anschließend codiert, übertragen, nach der Übertragung decodiert und durch Rücktranformation wieder in Teilsignale überführt werden, daß die die Teilsignale enthaltenen Blöcke mittels Synthesefernstern bewertet werden und wieder überlappend aneinander gefügt werden, **dadurch gekennzeichnet**, daß die Fensterfunktionen der Synthesefenster in Abhängigkeit der Fensterfunktionen der entsprechenden Analysefenster im Überlappungsbereich gemäß den Gleichungen

$$s_n(t) = \frac{a_{n-1}(T_B/2 - t)}{a_n(T_B/2 - t) * a_{n+1}(t) + a_n(t) * a_{n+1}(T_B/2 - t)} \; ; \; 0 \leq t \leq T_B/2$$

$$s_{n+1}(t) = \frac{a_n(T_B/2 - t)}{a_n(T_B/2 - t) * a_{n+1}(t) + a_n(t) * a_{n+1}(T_B/2 - t)} \; ; \; 0 \leq t \leq T_B/2$$

bestimmt werden, wobei
$a_n(t)$ die Analysefensterfunktion für den Block n,
$s_n(t)$ die Synthesefensterfunktion für den Block n,
$a_{n+1}(t)$ die Analysefensterfunktion für den Block n+1,
$s_n+_1(t)$ die Synthesefensterfunktion für den Block n+1
und
$T_B$ die Blockzeit
darstellen.

2. Verfahren nach Anspruch 1, **dadurch gekennzeichnet**, daß bei symmetrischen Fenstern die Fensterfunktion des Synthesefensters in Abhängigkeit der Fensterfunktion des Analysefensters gemäß der Gleichung

$$s(t) = \frac{a(T_B/2 - t)}{a(T_B/2 - t) * a(t) + a(t) * a(T_B/2 - t)} \; ; \; 0 \leq t \leq T_B/2$$

bestimmt wird, wobei
$a(t)$ die Analysefensterfunktion,
$s(t)$ die Synthesefensterfunktion und
$T_B$ die Blockzeit
darstellen.

3. Verfahren nach Anspruch 1 oder 2, **dadurch gekennzeichnet**, daß die Unterabtastung in der Weise vorgenommen wird, daß nach der Transformation im m-ten Block die Realteile der Spektralwerte mit geradem Frequenzindex und die Imaginärteile der Spektralwerte mit ungeradem Frequenzindex und daß im (m+1)-ten Block die Imaginärteile der Spektralwerte mit geradem Frequenzindex und die Realteile der Spektralwerte mit ungeradem Frequenzindex für die Codierung und Übertragung ausgewählt werden.

4. Verfahren nach Anspruch 1 oder 2, **dadurch gekennzeichnet**, daß die Unterabtastung in der Weise vorgenommen wird, daß nach der Transformation eine Pseudobetrags- und -phasendarstellung gebildet wird, indem jeweils die Realteile der Spektralwerte mit den Frequenzindexen n mit benachbarten Imaginärteilen der Spektralwerte mit den Frequenzindexen n+1 zu Betrag und Phase zusammengefaßt werden.

5. Verfahren nach Anspruch 1 oder 2, **dadurch gekennzeichnet**, daß die Unterabtastung in der Weise vorgenommen wird, daß nach der Transformation zwei aufeinanderfolgende Blöcke zusammengefaßt werden und eine Pseudobetrags- und -phasendarstellung gebildet wird, indem jeweils die Realteile der Spektralwerte des m-ten Blokkes mit den Imaginärteilen der Spektralwerte des (m+1)-ten Blockes gleichen Frequenzindexes ausgewählt und daraus Betrag und Phase errechnet werden.

6. Verfahren nach Anspruch 1 oder 2, **dadurch gekennzeichnet**, daß als bevorzugtes Transformationsverfahren bei der Hintransformation blockweise abwechselnd eine modifizierte Cosinustransformation gemäß der Gleichung

$$y(k) = D_k \sum_{n=0}^{N-1} x(n) * \cos\left[\frac{(2n+1+N/2)k\ \pi}{2N}\right] \; ; \; 0 \leq k \leq N-1$$

durchgeführt wird, wobei
y die Spektralwerte,
k die Indizes der Spektralwerte,
D eine Konstante gemäß der Definition
$$D_O \text{ (für } k = 0 = \sqrt{N} \; ; D_k = \sqrt{2/N} \; ; 1 \leq k \leq N - 1$$
x die Zeitwerte,
n die Indizes der Zeitwerte der Abtastung und
N die Zahl der Abtastwerte innerhalb eines Blockes
sind und eine modifizierte Sinustransformation gemäß der Gleichung

$$y(k) = D_k \sum_{n=0}^{N-1} x(n) * \sin\left[\frac{(2n+1+N/2)k\ \pi}{2N}\right] \; ; \; 1 \leq k \leq N$$

durchgeführt wird, wobei
y die Spektralwerte,
k die Indizes der Spektralwerte,
D eine Konstante gemäß der Definition
$$D_k = \sqrt{2/N} \; ; 1 \leq k \leq N - 1 \; ; D_N = \sqrt{N}$$
x die Zeitwerte,
n die Indizes der Zeitwerte der Abtastung und
N die Zahl der Abtastwerte innerhalb eines Blockes
sind und bei der Rücktransformation eine zur Hintransformation inverse Transformation durchgeführt wird.

7. Verfahren nach Anspruch 6, **dadurch gekennzeichnet**, daß vorzugsweise von den anfallenden Spektralwerten die geradzahligen ausgewählt werden und danach aus den weiterverwendeten Spektralwerten komplexe Werte gebildet werden, indem aus den Spektralwerten jeweils zweier aufeinanderfolgender, sich überlappenden Blöcke die Werte des ersten Blockes mit 1 und diejenigen des zweiten Blockes mit j multipliziert werden und gleichindizierte Werte der beiden Blöcke addiert werden.

7

## Claims

1. A method of transmitting a signal in which it is divided by windows into successive blocks which overlap by at least 50% and the signal portions contained in the blocks are weighted by means of analysis windows, then the part signals contained in the blocks undergo a transformation process allowing subsampling with concentration of the Alias components, such as Time Domain Aliasing Cancellation, the spectra resulting from the transformation are next coded, transmitted, decoded after the transmission and converted by inverse transformation back into part signals, the blocks containing the part signals are weighted by means of synthesis windows and reassembled overlapping each other, characterised in that the window functions of the synthesis windows are determined in dependence on the window functions of the corresponding analysis windows in the overlapping range according to the equations

$$s_n(t) = \frac{a_{n-1}(T_B/2 - t)}{a_n(T_B/2 - t) * a_{n+1}(t) + a_n(t) * a_{n+1}(T_B/2 - t)} \; ; 0 \leqq t \leqq T_B/2$$

$$s_{n+1}(t) = \frac{a_n(T_B/2 - t)}{a_n(T_B/2 - t) * a_{n+1}(t) + a_n(t) * a_{n+1}(T_B/2 - t)} \; ; 0 \leqq t \leqq T_B/2$$

in which
$a_n(t)$ represents the analysis window function for the block n,
$s_n(t)$ represents the synthesis window function for the block n,
$a_{n+1}(t)$ represents the analysis window for the block n + 1
$s_{n+1}(t)$ represents the synthesis window of the block n + 1, and
$T_B$ represents the block period.

2. A method according to claim 1, characterised in that with symmetrical windows the window function of the synthesis window is determined in dependence on the window function of the analysis window according to the equation

$$s(t) = \frac{a(T_B/2 - t)}{a(T_B/2 - t) * a(t) + a(t) * a(T_B/2 - t)} \; ; 0 \leqq t \leqq T_B/2$$

in which
$a(t)$ represents the analysis window function
$s(t)$ represents the synthesis window function and
$T_B$ represents the block period.

3. A method according to claim 1 or 2, characterised in that the subsampling is undertaken in such a way that after the transformation there are selected for the coding and transmission in the mth block the real parts of the spectral values with even frequency index and the imaginary parts of the spectral values with odd frequency index and that there are selected in the (m + 1) th block the imaginary parts of the spectral values with even frequency index and the real parts of the spectral values with odd frequency index.

4. A method according to claim 1 or 2, characterised in that the subsampling is undertaken in such a way that after the transformation there is formed a dummy magnitude and phase representation, in which in each case the real parts of the spectral values with the frequency indices n are combined with adjoining imaginary parts of the spectral values with the frequency indices n + 1 in magnitude and phase.

5. A method according to claim 1 or 2, characterised in that subsampling is undertaken in such a way that after the transformation two successive blocks are combined and there is formed a dummy magnitude and phase representation, in which in each case the real parts of the spectral values of the mth block are selected with the imaginary parts of the spectral values of the (m + 1)th block with the same frequency index, and magnitude and phase are calculated therefrom.

6. A method according to claim 1 or 2, characterised in that as a preferred transformation method for the initial transformation there is undertaken in blocks alternately a modified cosine transformation according to the equation

$$y(k) = D_k \sum_{n=0}^{N-1} x(n) * \cos\left[\frac{(2n+1+N/2)k \; \pi}{2N}\right] \; ; \; 0 \le k \le N-1$$

in which

y represents the spectral values

k represents the indices of the spectral values,

D represents a constant according to the definition

$$D_O \text{ (for } k = 0) = \sqrt{N} \; ; \; D_k = \sqrt{2/N} \; ; \; 1 \le k \le N - 1$$

x represents the time values,

n represents the indices of the time values of the sampling and

N represents the number of sampling values in a block

and a modified sine transformation is undertaken according to the equation

$$y(k) = D_k \sum_{n=0}^{N-1} x(n) * \sin\left[\frac{(2n+1+N/2)k \; \pi}{2N}\right] \; ; \; 1 \le k \le N$$

in which

y represents the spectral values,

k represents the indices of the spectral values

D represents a constant according to the definition

$$D_k = \sqrt{2/N} \; ; \; 1 \le k \le N - 1 \; ; \; D_N = \sqrt{N}$$

x represents the time values

n represents the indices of the time values of the sampling and

N represents the number of sampling values in a block

and for the transformation back there is undertaken a transformation which is inverse to the initial transformation.

7. A method according to claim 6 <u>characterised in that</u> preferably from the spectral values occurring there are selected the even ones and thereafter from the spectral values which are further employed there are formed complex values, in which from the spectral values of two successive and mutually-overlapping blocks in each case the values of the first block are multiplied by 1 and those of the second block are multiplied by j and values of both blocks having the same indices are added.

**Revendications**

1. Procédé pour la transmission d'un signal, ce signal étant réparti par des fenêtres en blocs successifs qui se chevauchent d'au moins 50% et les portions de signal contenues dans les blocs étant évaluées au moyen de fenêtres d'analyse de telle manière que les signaux partiels contenus dans les blocs sont soumis à un procédé de transformation qui permet un sous-balayage avec compensation des composantes fictives tel que, par exemple, le "Time Domain Aliasing Cancellation", que les spectres qui se forment comme résultat de la transformation sont ensuite codés, transmis, décodés après la transmission et retransformés en signaux partiels par transformation inverse, que les blocs qui contiennent les signaux partiels sont évalués au moyen de fenêtres de synthèse et sont ensuite assemblés en se chevauchant à nouveau, **caractérisé en ce** que les fonctions de fenêtre des fenêtres de synthèse sont déterminées en fonction des fonctions de fenêtre des fenêtres d'analyse correspondantes dans la zone du chevauchement selon les équations

$$s_n(t) = \frac{a_{n-1}(T_B/2 - t)}{a_n(T_B/2 - t) * a_{n+1}(t) + a_n(t) * a_{n+1}(T_B/2 - t)} \; ; \; 0 \le t \le T_B/2$$

$$s_{n+1}(t) = \frac{a_n(T_B/2 - t)}{a_n(T_B/2 - t) \ast a_{n+1}(t) + a_n(t) \ast a_{n+1}(T_B/2 - t)} \; ; \; 0 \leqq t \leqq T_B/2$$

$a_n(t)$ représentant la fonction de fenêtre d'analyse pour le bloc n,

$s_n(t)$ la fonction de fenêtre de synthèse pour le bloc n,

$a_{n+1}(t)$ la fonction de fenêtre d'analyse pour le bloc n+1,

$s_{n+1}(t)$ la fonction de fenêtre de synthèse pour le bloc n+1 et

$T_B$ le temps du bloc.

2. Procédé selon la revendication 1, **caractérisé en ce** que la fonction de fenêtre de la fenêtre de synthèse est, pour les fenêtres symétriques, déterminée en fonction de la fonction de fenêtre de la fenêtre d'analyse conformément à l'équation

$$s(t) = \frac{a(T_B/2 - t)}{a(T_B/2 - t) \ast a(t) + a(t) \ast a(T_B/2 - t)} \; ; \; 0 \leqq t \leqq T_B/2$$

$a(t)$ représentant la fonction de fenêtre d'analyse,

$s(t)$ la fonction de fenêtre de synthèse et

$T_B$ le temps du bloc.

3. Procédé selon la revendication 1 ou 2, **caractérisé en ce** que le sous-balayage est effectué d'une manière telle qu'après la transformation dans le m-ième bloc les parties réelles des valeurs spectrales sont sélectionnées avec un indice de fréquence pair et les parties imaginaires des valeurs spectrales avec un indice de fréquence impair et que dans le (m+1)-ième bloc les parties imaginaires des valeurs spectrales sont sélectionnées avec un indice de fréquence pair et les parties réelles des valeurs spectrales avec un indice de fréquence impair pour le codage et la transmission.

4. Procédé selon la revendication 1 ou 2, **caractérisé en ce** que le sous-balayage est effectué d'une manière telle qu'une représentation de valeur absolue fictive et de phase fictive est formée après la transformation, les parties réelles des valeurs spectrales avec les indices de fréquence n étant respectivement assemblées aux parties imaginaires voisines des valeurs spectrales avec les indices de fréquence n+1 en valeur absolue et phase.

5. Procédé selon la revendication 1 ou 2, **caractérisé en ce** que le sous-balayage est effectué d'une manière telle qu'après la transformation deux blocs successifs sont assemblés et qu'il est formé une représentation de valeur absolue fictive et de phase fictive, les parties réelles des valeurs spectrales du m-ième bloc étant sélectionnées avec les parties imaginaires des valeurs spectrales du (m+1)-ième bloc de même indice de fréquence et que la valeur absolue et la phase sont calculées à partir de là.

6. Procédé selon la revendication 1 ou 2, **caractérisé en ce** qu'une transformation modifiée à cosinus est réalisée comme procédé de transformation préféré lors de la transformation aller bloc par bloc à tour de rôle selon l'équation

$$y(k) = D_k \sum_{n=0}^{N-1} x(n) \ast \cos\left[\frac{(2n+1+N/2)k\pi}{2N}\right] ; \qquad 0 \leq k \leq N\text{-}1$$

$y$ étant les valeurs spectrales,

$k$ les indices des valeurs spectrales,

$D$ une constante selon la définition

$$D_O \, ( k = 0) = \sqrt{N} \; ; D_k = \sqrt{2/N} \; ; \qquad 1 \leqq k \leqq N - 1$$

$x$ les valeurs de temps,

$n$ les indices des valeurs de temps du balayage et

$N$ le nombre des valeurs de balayage à l'intérieur d'un bloc

et qu'une transformation modifiée à sinus est réalisée selon l'équation

$$y(k) = D_k \sum_{n=0}^{N-1} x(n) * \sin\left[\frac{(2n+1+N/2)k\pi}{2N}\right]; \qquad 1 \le k \le N$$

y étant les valeurs spectrales,
k les indices des valeurs spectrales,
D une constante selon la définition

$$D_k = \sqrt{2/N} \; ; \; 1 \le k \le N - 1 \; ; \; D_N = \sqrt{N} \; ;$$

x les valeurs de temps,
n les indices des valeurs de temps du balayage et
N le nombre des valeurs de balayage à l'intérieur d'un bloc
et qu'une transformation inverse à la première transformation est effectuée lors de la transformation inverse.

7.  Procédé selon la revendication 6, **caractérisé en ce** que parmi les valeurs spectrales produites les valeurs d'ordre pair sont sélectionnées de préférence et que des valeurs complexes sont ensuites formées à partir des valeurs spectrales que l'on continue d'utiliser, cependant qu'à partir des valeurs spectrales de deux blocs successifs respectifs qui se chevauchent, les valeurs du premier bloc sont multipliées par 1 et celles du second bloc par j et que les valeurs de même indice des deux blocs sont ajoutées.

| A/D–Wandlung | — 1 |

| Selektion 1024 Abtastwerte | — 2 |

| 50% überlappende Blöcke | — 3 |

| Bewertung mit Analysefenster | — 4 |

| Transformation | — 5 |

| Pseudobetrags – und Phasenbildung | — 6 |

| Codierung , Übertragung , Decodierung | — 7 |

| inverse Transformation | — 8 |

| Bewertung mit Synthesefenster | — 9 |

| Überlappende Addition | — 10 |

| Kontinuierliche Abtastwerte | — 11 |

| D/A– Wandlung | — 12 |

FIG.1

1. Analyse – und Synthesefenster nach B. Feiten (AES–Hamburg '89)

FIG. 2

2. Analyse –und Synthesefenster nach Bestimmungsgleichung

FIG.4

Vergleich des Zeitalias:

Analysefenster nach B. Felten

FIG. 3

Analysefenster nach Bestimmungsgleichung

FIG. 5

13

Pseudo Betrags - und Phasenbildung im m -ten Block :

| Real / Imaginärteil - Darstellung | Re(0), 0<br>0, Im(1) | Re(2), 0<br>0 , Im(3) | Re(4), 0<br>0 , Im(5) | Re(6), 0 ----<br>0 , Im(7) ---- |
|---|---|---|---|---|
| Pseudobeträge - und phasen | Betrag(0)<br>Phase (0) | Betrag(1)<br>Phase (1) | Betrag(2)<br>Phase (2) | Betrag(3)<br>Phase (3) |

## FIG.6

Pseudobetrags - und phasenbildung aus der Zusammenfassung des m-ten und des (m+1) ten Blocks :

| m ter Block | Re (0)<br>0 | 0<br>Im(1) | Re (2)<br>0 | 0<br>Im(3) | Re(4)<br>0 |
|---|---|---|---|---|---|
| (m+1) ter Block : | 0<br>Im(0) | Re(1)<br>0 | 0<br>Im(2) | Re(3) | 0<br>Im(4) |
| Pseudobetrag - und phase | Betrag(0)<br>Phase (0) | Betrag(1)<br>Phase(1) | Betrag(2)<br>Phase(2) | Betrag(3)<br>Phase(3) | Betrag(4)<br>Phase (4) |

## FIG.7